# EUROPÄISCHE PATENTSCHRIFT

(11) **EP 1 182 085 B1**
(45) Veröffentlichungstag und Bekanntmachung des Hinweises auf die Patenterteilung: **25.02.2004**
(21) Anmeldenummer: 01120043.3
(22) Anmeldetag: 21.08.2001
(51) Int. Cl.: B60R 13/02, B60R 13/08, B60R 5/04

(54) **Zweischalige Hutablage in einem Kraftfahrzeug**
Dual shell rear window shelf in a motor vehicle
Plage arrière à deux surfaces dans un véhicule motorisé

(30) Priorität: 25.08.2000 DE 20014708 U
(43) Veröffentlichungstag der Anmeldung: 27.02.2002
(73) Patentinhaber: Seeber AG & Co., 68165 Mannheim (DE)
(72) Erfinder: Roth, Adalbert, 76596 Forbach (DE); Wirth, Reinhard, 76571 Gaggenau (DE)
(74) Vertreter: Lasch, Hartmut Dipl.-Ing.

(56) Entgegenhaltungen:
- DE-A- 4 124 478
- DE-A- 19 635 317
- PATENT ABSTRACTS OF JAPAN vol. 1996, no. 09, 30. September 1996 (1996-09-30) & JP 08 113091 A (HAYASHI GIJUTSU KENKYUSHO:KK), 7. Mai 1996 (1996-05-07)

## Beschreibung

Die Erfindung betrifft eine zweischalige Hutablage in einem Kraftfahrzeug, mit einem Stabilisierungsträger als Unterschale und einem Dekorträger als Oberschale, wobei zwischen dem Stabilisierungsträger und dem Dekorträger ein Hohlraum gebildet ist, und mit schallabsorbierenden Elementen.

Eine Hutablage in zweischaliger Ausgestaltung ist seit langem bekannt siehe z.B. die DE 19 635 317 A. Dabei übernimmt die Unterschale die Stabilisierungsfunktion, während die Oberschale eine Dekorschicht trägt und den ästhetischen Gesamteindruck der Hutablage bestimmt. Die Hutablage dient primär als obere Abdeckung des Kofferraums des Kraftfahrzeugs und zur Auflage von kleineren Gegenständen, darüber hinaus ist sie jedoch auch ein wesentliches Element zur Schallabsorption im Kraftfahrzeug-Innenraum. Diese Eigenschaften werden bei der bekannten Hutablage im wesentlichen dadurch erreicht, daß die Unterschale und die Oberschale unter Bildung eines Hohlraums auf Abstand angeordnet sind und daß in den Hohlraum Zuschnitte aus einem schallabsorbierenden Material, beispielsweise einen Baumwollfaservlies, eingelegt sind. Alternativ kann der Hohlraum auch ganz oder zumindest teilweise ausgeschäumt werden. Das Einlegen der Zuschnitte oder das Ausschäumen des Hohlraums verbessert zwar die schallabsorbierenden Eigenschaften der Hutablage wesentlich, jedoch sind diese Maßnahmen herstellungstechnisch aufwendig und erhöhen somit die Herstellungskosten der Hutablage.

Der Erfindung liegt die Aufgabe zugrunde, eine Hutablage der genannten Art zu schaffen, die bei einem einfachen Aufbau gute schallabsorbierende Eigenschaften besitzt.

Diese Aufgabe wird erfindungsgemäß bei einer zweischaligen Hutablage gelöst, wenn die Schallwellen in den Hohlraum zwischen dem Stabilisierungsträger und dem Dekorträger eindringen können und dort absorbiert werden. Das Eindringen der Schallwellen ist erleichtert, wenn in dem Stabilisierungsträger und in dem Dekorträger Durchbrechungen ausgebildet sind, die gleichzeitig der Belüftung des Hohlraums und zur Luftführung beim Luftausgleich zwischen dem Kofferraum und dem Innenraum des Kfz dienen. Der Stabilisierungsträger ist ein Faservlies mit bereichsweise unterschiedlicher Verdichtung und daß die Bereiche geringerer Verdichtung sind als Luft und Fasern enthaltende Kammern ausgebildet, die die schallabsorbierenden Elemente bilden.

Es wird von der Grundüberlegung ausgegangen, daß nicht die gesamte Fläche der Unterschale bzw. des Stabilisierungsträgers für die Aussteifung und Stabilisierung der Hutablage notwendig ist. Aus diesem Grunde wird der Stabilisierungsträger nur in einigen Bereichen höher verdichtet, wobei die Anzahl und Ausrichtung dieser Bereiche ausreicht, der Hutablage insgesamt die notwendige Stabilität zu verleihen. Neben den Bereichen höherer Verdichtung sind am Stabilisierungsträger auch Bereiche geringerer Verdichtung vorgesehen. Die geringere Verdichtung des Faservlieses in diesen Bereichen führt dazu, daß im Inneren dieser Bereiche eine Mischung aus Fasern und Luft verbleibt, die gute schallabsorbierende Eigenschaften besitzt. Auf diese Weise können die Bereiche geringerer Verdichtung als die schallabsorbierenden Elemente dienen, so daß auf die Einlage von schallabsorbierenden Zuschnitten in den Hohlraum zwischen der Unterschale und der Oberschale oder gar dessen Ausschäumen verzichtet werden kann. Der Aufbau der zweischaligen Hutablage ist somit gegenüber der vorbekannten Hutablage wesentlich vereinfacht und die Hutablage läßt sich in kostengünstiger Weise herstellen.

In bevorzugter Ausgestaltung der Erfindung ist vorgesehen, daß die Bereiche geringerer Verdichtung jeweils von Bereichen höherer Verdichtung umgeben sind, so daß einerseits der Hutablage aufgrund der rahmenartigen Ausgestaltung und Anordnung der Bereiche höherer Verdichtung eine gute Stabilität verliehen und insbesondere ein Lösen von Fasern der Bereiche geringerer Verdichtung zuverlässig vermieden ist.

Es hat'sich als vorteilhaft erwiesen, als Faservlies des Stabilisierungsträgers ein Polyethylenterephtalat (PET)-Bikomponenten-Mikrofaservlies zu verwenden, das vorzugsweise ein Flächengewicht im Bereich von 800 bis 2000g/m² aufweist. Zur Herstellung des Stabilisierungsträgers wird das Faservlies über die gesamte Fläche, jedoch bereichsweise unterschiedlich stark verdichtet. Vorzugsweise ist in den Bereichen höherer Verdichtung eine Wandstärke des Stabilisierungsträgers im Bereich von 0,5 bis 5 mm und in den Bereichen geringerer Verdichtung eine Wandstärke im Bereich von 10 bis 30 mm vorgesehen.

Der die Unterschale bildende Stabilisierungsträger kann auf seiner dem Dekorträger abgewandten Unterseite zur Oberflächengestaltung mit einem Dekorvlies überdeckt sein, das vorzugsweise im sogenannten "One-Shot-Verfahren" klebstofffrei aufgebracht wird.

Der die Oberschale bildende Dekorträger kann in herkömmlicher Weise ausgebildet sein und besteht in bevorzugter Ausgestaltung aus einem duroplastisch gebundenen Naturfaserverbundwerkstoff insbesondere in Kompakt- oder Sandwichbauweise.

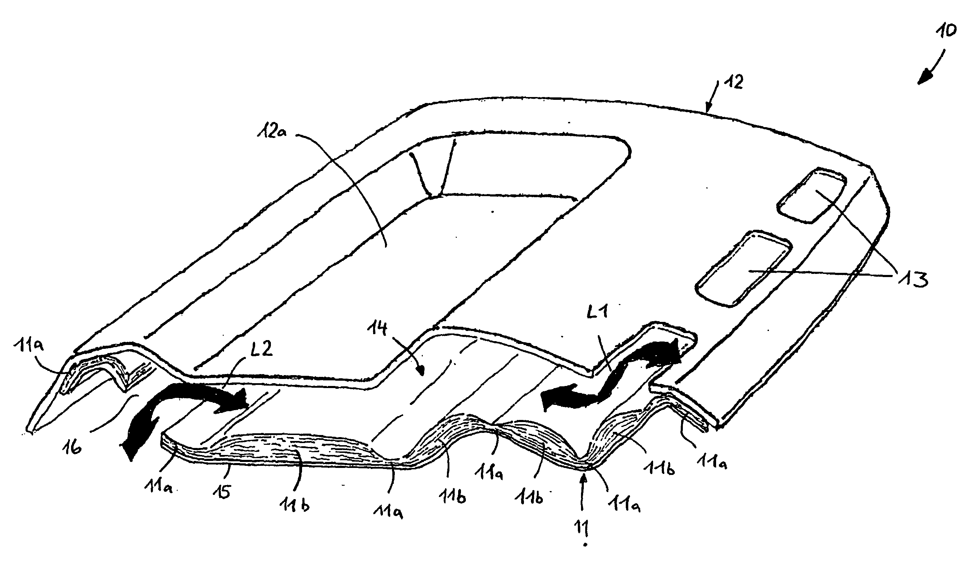

Weitere Einzelheiten und Merkmale der Erfindung sind aus der folgenden Beschreibung eines Ausführungsbeispiels unter Bezugnahme auf die Zeichnung ersichtlich, wobei die einzige Figur eine perspektivische Schnittdarstellung einer erfindungsgemäßen zweischaligen Hutablage zeigt.

Gemäß der Figur umfaßt eine zweischalige Hutablage 10 einen eine Unterschale bildenden Stabilisierungsträger 11 und einen im Abstand oberhalb von diesem als Oberschale dienenden Dekorträger 12. Der Stabilisierungsträger 11 ist von dem Dekorträger 12 vollständig überdeckt und mit diesem über einen umlaufenden Flansch und gegebenenfalls auch mit in der Fläche liegenden Abstützdomen verschweißt oder verklebt. Zwischen dem Stabilisierungsträger 11 und dem Dekorträger 12 ist ein Hohlraum 14 vorgesehen.

Die Oberschale 12, in der in bekannter Weise eine Vertiefung 12a zur Aufnahme kleinerer Gegenstände ausgebildet ist, besteht aus einem duroplastisch gebundenen Naturfaser-Verbundwerkstoff in Kompakt- oder Sandwichbauweise und besitzt an ihrer einen Längskante mehrere nebeneinander angeordnete Durchbrechungen 13, die den Zutritt von Luft in den Innenraum 14 ermöglichen, wie durch den Doppelpfeil L1 angedeutet ist.

Der Stabilisierungsträger 11 ist aus einem PET-Bikomponenten-Mikrofaservlies hergestellt, das bereichsweise unterschiedlich verdichtet ist. In den Randbereichen sowie in mittleren Bereichen 11a, die bei dem dargestellten Ausführungsbeispiel als in Längsrichtung verlaufende, streifenförmige Bereiche ausgebildet sind, ist das Faservlies höher verdichtet, so daß diese Bereiche 11a im wesentlichen der Funktion der Aussteifung des Stabilisierungsträgers 11 und somit der Hutablage 10 dienen. Zwischen den Bereichen 11a höherer Verdichtung sind Bereiche 11b geringerer Verdichtung vorgesehen. Diese Bereiche 11b geringerer Verdichtung bilden Kammern, in denen Luft und zusätzlich die Fasern des Faservlieses enthalten sind. Aufgrund dieses Aufbaus dienen die Bereiche 11b geringerer Verdichtung im wesentlichen der Schallabsorption. An derjenigen Längskante der Hutablage 10, die der die Durchbrechungen 13 des Dekorträgers 12 aufweisenden Kante entgegengesetzt ist, sind in dem Stabilisierungsträger 11 entsprechende, in Längsrichtung nebeneinander liegende Durchbrechungen 16 vorgesehen, die ebenfalls einen Lufteintritt in den Hohlraum 14 zwischen dem Stabilisierungsträger 11 und dem Dekorträger 12 ermöglichen, wie durch den Doppelpfeil L2 angedeutet ist. Somit kann der Hohlraum gut belüftet werden und die zu absorbierenden Schallwellen können in einfacher Weise in den Hohlraum 14 eindringen.

Auf der Unterseite des Stabilisierungsträgers 11 ist zur Oberflächengestaltung ein zusätzliches Dekorvlies 15 aufgebracht.

## Patentansprüche

1. Zweischalige Hutablage in einem Kraftfahrzeug, mit einem Stabilisierungsträger (11) als Unterschale und einem Dekorträger (12) als Oberschale, wobei zwischen dem Stabilisierungsträger (11) und dem Dekorträger (12) ein Hohlraum (14) gebildet ist, und mit schallabsorbierenden Elementen, wobei der Stabilisierungsträger (11) ein Faservlies mit bereichsweise unterschiedlicher Verdichtung ist und die Bereiche (11b) geringerer Verdichtung als Luft und Fasern enthaltende Kammern ausgebildet sind, die die schallabsorbierenden Elemente bilden, **dadurch gekennzeichnet daß** in dem Stabilisierungsträger (11) und in dem Dekorträger (12) Durchbrechungen (13,16) ausgebildet sind, die zur Belüftung des Hohlraums (14) und zur Luftführung beim Luftausgleich zwischen dem Kofferraum und dem Innenraum des Kfz dienen.

2. Zweischalige Hutablage nach Anspruch 1, **dadurch gekennzeichnet, daß** die Bereiche (11b) geringerer Verdichtung jeweils von Bereichen (11a) höherer Verdichtung umgeben sind.

3. Zweischalige Hutablage nach Anspruch 1 oder 2, **dadurch gekennzeichnet, daß** das Faservlies ein Polyethylenterephthalat (PET)-Bikomponenten-Mikrofaservlies ist.

4. Zweischalige Hutablage nach einem der Ansprüche 1 bis 3, **dadurch gekennzeichnet, daß** das Faservlies ein Flächengewicht im Bereich von 800 bis 2000g/m² aufweist.

5. Zweischalige Hutablage nach einem der Ansprüche 1 bis 4, **dadurch gekennzeichnet, daß** der Stabilisierungsträger (11) in den Bereichen (11a) höherer Verdichtung eine Wandstärke im Bereich von 0,5 bis 5mm und in den Bereichen (11b) geringerer Verdichtung eine Wandstärke im Bereich von 10 bis 30mm aufweist.

6. Zweischalige Hutablage nach einem der Ansprüche 1 bis 5, **dadurch gekennzeichnet, daß** der Stabilisierungsträger (11) auf seiner dem Dekorträger (12) abgewandten Unterseite mit einem Dekorvlies (15) überdeckt ist.

7. Zweischalige Hutablage nach einem der Ansprüche 1 bis 6, **dadurch gekennzeichnet, daß** der Dekorträger (12) aus einem duroplastisch gebundenen Naturfaser-Verbundwerkstoff besteht.

## Claims

1. Two-shell rear window shelf in a motor vehicle, having a stabilization carrier (11) as the lower shell and a decoration carrier (12) as the upper shell and between the stabilization carrier (11) and the decoration carrier (12) is formed a cavity (14), and having sound absorbing elements, the stabilization carrier (11) being a nonwoven with zonally differing compression and the lower compression areas (11b) are constructed as chambers containing air and fibres forming the sound absorbing elements, **characterized in that** in the stabilization carrier (11) and in the decoration carrier (12) are formed openings (13, 16), which are used for ventilating the cavity (14) and for air circulation in the case of air compensation between the boot and the interior of the motor vehicle.

2. Two-shell rear window shelf according to claim 1, **characterized in that** the lower compression areas (11b) are in each case surrounded by higher compression areas (11a).

3. Two-shell rear window shelf according to claim 1 or 2, **characterized in that** the nonwoven is a polyethylene terephthalate (PET)-two-component-microfibre fleece.

4. Two-shell rear window shelf according to one of the claims 1 to 3, **characterized in that** the nonwoven has a weight per unit area in the range 800 to 2000 g/m².

5. Two-shell rear window shelf according to one of the claims 1 to 4, **characterized in that** in the higher compression areas (11a) the stabilization carrier (11) has a wall thickness in the range 0.5 to 5 mm and in the lower compression areas (11b) a wall thickness in the range 10 to 30 mm.

6. Two-shell rear window shelf according to one of the claims 1 to 5, **characterized in that** the underside of the stabilization carrier (11) remote from the decoration carrier (12) is covered with a decorative fleece (15).

7. Two-shell rear window shelf according to one of the claims 1 to 6, **characterized in that** the decoration carrier (12) comprises a thermoset bound natural fibre composite material.

## Revendications

1. Plage arrière à double paroi dans un véhicule à moteur, comprenant un support stabilisateur (11) comme paroi inférieure et un support décoratif (12) comme paroi supérieure, un espace vide (14) étant ménagé entre le support stabilisateur (11) et le support décoratif (12), et comprenant également des éléments à absorption acoustique, dans laquelle le support stabilisateur (11) est constitué par un non-tissé dont le compactage varie selon les zones et dans laquelle les zones (11b) à faible compactage sont constituées en cellules contenant de l'air et des fibres, constituant les éléments à absorption acoustique, **caractérisée en ce que** des ouvertures traversantes (13,16) sont ménagés dans le support stabilisateur (11) et le support décoratif (12), servant à l'aération de l'espace vide (14) et à la circulation de l'air lors de la compensation d'air entre le coffre à bagages et l'intérieur du véhicule à moteur.

2. Plage arrière à double paroi selon la revendication 1, **caractérisée en ce que** les zones (11b) à compactage réduit sont à chaque fois entourées de zones (11a) à compactage élevé.

3. Plage arrière à double paroi selon la revendication 1 ou 2, **caractérisée en ce que** le non-tissé est un non-tissé à microfibres bicomposant à base de polyéthylène téréphtalate (PETP).

4. Plage arrière à double paroi selon l'une quelconque des revendications 1 à 3, **caractérisée en ce que** le non-tissé présente un grammage situé entre 800 et 2000g/m².

5. Plage arrière à double paroi selon l'une quelconque des revendications 1 à 4, **caractérisée en ce que** le support stabilisateur (11) présente une épaisseur située entre 0,5 et 5mm dans les zones (11a) de compactage élevé et une épaisseur située entre 10 et 30mm dans les zones (11b) de faible compactage.

6. Plage arrière à double paroi selon l'une quelconque des revendications 1 à 5, **caractérisée. en ce que** le support stabilisateur (11) est recouvert d'un non-tissé décoratif (15) sur sa face intérieure opposée au support décoratif (12).

7. Plage arrière à double paroi selon l'une quelconque des revendications 1 à 6, **caractérisée en ce que** le support décoratif (12) est réalisé dans un matériau composite de fibres naturelles liées par thermodurcissage.
